# EUROPEAN PATENT APPLICATION

(11) **EP 3 896 133 A1**
(43) Date of publication of application: **20.10.2021**
(21) Application number: 19895149.3
(22) Date of filing: 12.11.2019
(51) Int. Cl.: C09J 5/00, C09J 11/06, C09J 201/00, C09J 7/38

(54) **PRESSURE-SENSITIVE ADHESIVE COMPOSITION AND PRESSURE-SENSITIVE ADHESIVE SHEET**

(30) Priority: 13.12.2018 JP 2018233316; 19.08.2019 JP 2019149838
(71) Applicant: Nitto Denko Corporation, Ibaraki-shi Osaka 567-8680 (JP)
(72) Inventor: NAGATA, Mizuho, Ibaraki-shi, Osaka 567-8680 (JP); TACHIKAWA, Yu, Ibaraki-shi, Osaka 567-8680 (JP); HIRANO, Keisuke, Ibaraki-shi, Osaka 567-8680 (JP); MATSUSHITA, Kiichiro, Ibaraki-shi, Osaka 567-8680 (JP)
(74) Representative: Hoffmann Eitle
(86) International application number: PCT/JP2019/044346
(87) International publication number: WO 2020/121715

(57) **Abstract**

A pressure-sensitive adhesive composition includes a pressure-sensitive adhesive component and a gas generating particle dispersed in the pressure-sensitive adhesive component. A tensile elastic modulus at 25°C of the pressure-sensitive adhesive composition is 5 MPa or less. A gas generation amount at which the gas generating particle is generated in the pressure-sensitive adhesive composition is 5 mL/g or more in terms of decane at 0°C and 1013 hPa in a solid content of the pressure-sensitive adhesive composition.

## Description

### TECHNICAL FIELD

The present invention relates to a pressure-sensitive adhesive composition and a pressure-sensitive adhesive sheet.

### BACKGROUND ART

A pressure-sensitive adhesive sheet which exhibits pressure-sensitive adhesive properties (pressure-sensitively adhesive properties) for a necessary period of time with respect to an adherend, but afterwards, can easily peel the adherend has been known.

For example, an adhesive material (pressure-sensitive adhesive material or pressure-sensitively adhesive material) containing a gas generating agent that generates a gas and a curable adhesive resin has been proposed (ref: for example, Patent Document 1 below).

Patent Document 1 discloses an adhesive material in which a glycidyl azide polymer (gas generating agent) including a main chain made of a straight-chain oxypropylene and a side chain into which an azide group is introduced is dissolved in a curable adhesive resin. The glycidyl azide polymer thermally decomposes the azide group (-N₃) in the side chain by heating the adhesive material, thereby generating a nitrogen gas. Therefore, releasability (properties of easily peeling the adherend) of the adhesive material is developed.

### Citation List

### Patent Document

Patent Document 1: Japanese Patent No. 4238037

### SUMMARY OF THE INVENTION

### PROBLEM TO BE SOLVED BY THE INVENTION

However, in the glycidyl azide polymer (gas generating agent) of Patent Document 1, a methylene in the side chain and the main chain are not thermally decomposed, while the azide group in the side chain is thermally decomposed, and a by-product remains as a residue. Therefore, the glycidyl azide polymer (gas generating agent) of Patent Document 1 includes a group which does not contribute to gas generation in a molecule at a large proportion. Then, a nitrogen gas generation amount per unit mass in the gas generating agent is low. Therefore, it is necessary to increase a mixing ratio of the gas generating agent in the adhesive material and ensure a constant ratio of the gas generation amount in the adhesive material. However, when the ratio of the gas generation amount is increased, the mixing ratio of the curable adhesive resin is relatively lowered. Therefore, there is a problem that an initial pressure-sensitive adhesive force of the adhesive material decreases.

The present invention provides a pressure-sensitive adhesive composition and a pressure-sensitive adhesive sheet having both excellent releasability and excellent initial pressure-sensitive adhesive properties.

### MEANS FOR SOLVING THE PROBLEM

The present invention (1) includes a pressure-sensitive adhesive composition including a pressure-sensitive adhesive component and a gas generating particle dispersed in the pressure-sensitive adhesive component, wherein a tensile elastic modulus at 25°C of the pressure-sensitive adhesive composition is 5 MPa or less, and a gas generation amount at which the gas generating particle is generated in the pressure-sensitive adhesive composition is 5 mL/g or more in terms of decane at 0°C and 1013 hPa in a solid content of the pressure-sensitive adhesive composition.

The present invention (2) includes the pressure-sensitive adhesive composition described in (1), wherein the gas generating particle has an average particle size of 10 µm or less.

The present invention (3) includes the pressure-sensitive adhesive composition described in (1) or (2), wherein the gas generating particle is an azodicarbonamide.

The present invention (4) includes a pressure-sensitive adhesive sheet including a pressure-sensitive adhesive layer made of the pressure-sensitive adhesive composition described in any one of (1) to (3).

The present invention (5) includes the pressure-sensitive adhesive sheet described in (4) further including a second pressure-sensitive adhesive layer made of a second pressure-sensitive adhesive composition containing no gas generating agent, wherein the pressure-sensitive adhesive layer and the second pressure-sensitive adhesive layer are disposed in order in a thickness direction.

### EFFECT OF THE INVENTION

In the pressure-sensitive adhesive composition of the present invention, since the gas generation amount at which the gas generating particles are generated in the pressure-sensitive adhesive composition is as high as 5 mL/g or more with respect to the solid content of the pressure-sensitive adhesive composition, it has excellent releasability.

In addition, in the pressure-sensitive adhesive composition of the present invention, it is only necessary that the gas generating particles are simply dispersed in the pressure-sensitive adhesive component, that is, as in Patent Document 1, it is not necessary to include a large number of groups that do not contribute to generation of a gas for being dissolved in the pressure-sensitive adhesive component. Therefore, it is possible to suppress a decrease in the gas generation amount, while a mixing ratio of the gas generating particles is retained low to some extent, and accordingly, it is possible to increase a mixing ratio of the pressure-sensitive adhesive component. Therefore, the pressure-sensitive adhesive composition has excellent initial pressure-sensitive adhesive properties.

As a result, the pressure-sensitive adhesive composition of the present invention has both excellent releasability and excellent initial pressure-sensitive adhesive properties.

Further, since the pressure-sensitive adhesive sheet of the present invention includes the pressure-sensitive adhesive layer made of the pressure-sensitive adhesive composition described above, it has both excellent releasability and excellent initial pressure-sensitive adhesive properties.

### BRIEF DESCRIPTION OF THE DRAWINGS

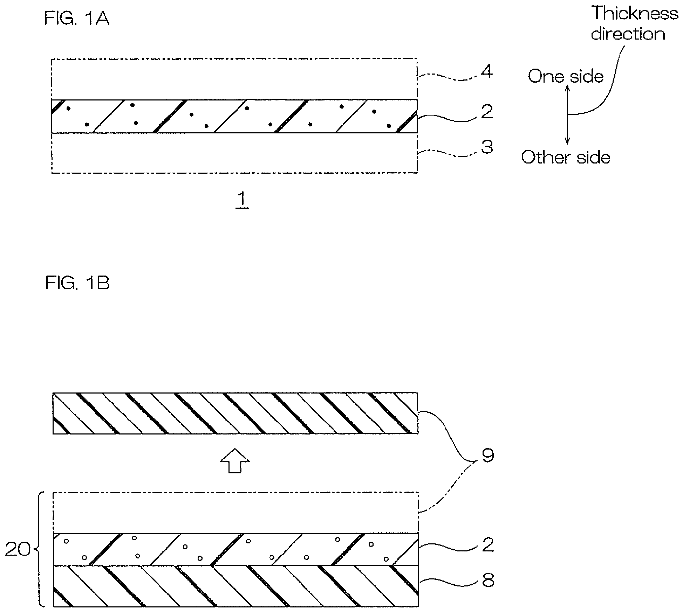

FIGS. 1A to IB show cross-sectional views for illustrating one embodiment of a pressure-sensitive adhesive sheet of the present invention:
FIG. 1A illustrating a pressure-sensitive adhesive sheet including a pressure-sensitive adhesive layer sandwiched between a substrate sheet and a second substrate sheet and
FIG. IB illustrating an embodiment in which a gas is generated from gas generating particles and an adherend is peeled from the pressure-sensitive adhesive layer.
FIGS. 2A to 2B show cross-sectional views for illustrating a modified example of a pressure-sensitive adhesive sheet of the present invention:

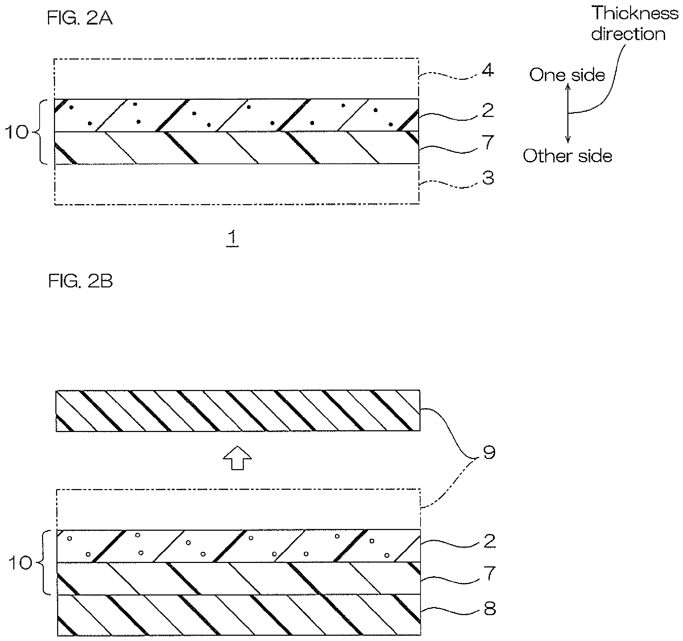

FIG. 2A illustrating a pressure-sensitive adhesive sheet including a pressure-sensitive adhesive layer and a second pressure-sensitive adhesive layer and
FIG. 2B illustrating an embodiment in which a gas is generated from gas generating particles and an adherend is peeled from the pressure-sensitive adhesive layer.

### DESCRIPTION OF EMBODIMENTS

First, one embodiment of a pressure-sensitive adhesive composition of the present invention is described.

The pressure-sensitive adhesive composition contains a pressure-sensitive adhesive component and gas generating particles.

The pressure-sensitive adhesive component imparts pressure-sensitive adhesive properties (also referred to as initial pressure-sensitive adhesive properties or pressure-sensitively adhesive properties) to the pressure-sensitive adhesive composition to develop a pressure-sensitive adhesive force (also referred to as an initial pressure-sensitive adhesive force or a pressure-sensitively adhesive force) with respect to an adherend 9 (described later, FIG. 1B). The pressure-sensitive adhesive component is a matrix which disperses the gas generating particles in the pressure-sensitive adhesive composition.

The pressure-sensitive adhesive component is not particularly limited as long as it can exhibit the above-described function (action). Examples of the pressure-sensitive adhesive component include pressure-sensitive adhesive polymers (base polymers) such as rubber-based polymers, acrylic polymers, silicone-based polymers, polyester-based polymers, polyamide-based polymers, urethane-based polymers, and styrene-diene block-based polymers.

The pressure-sensitive adhesive polymer is described in detail as a pressure-sensitive adhesive base polymer in Japanese Unexamined Patent Publication No. 2008-266455 and the like, and can be appropriately selected from these. Preferably, an acrylic polymer is used.

An example of the acrylic polymer includes a copolymer of a monomer component containing an alkyl (meth)acrylate having an alkyl portion having a carbon atom of 1 or more and 18 or less as a main monomer and containing a polar group-containing vinyl monomer as a secondary monomer.

The alkyl (meth)acrylate is an alkyl methacrylate and/or an alkyl acrylate. Examples of the alkyl (meth)acrylate include alkyl (meth)acrylates having an alkyl portion which is a straight-chain or branched alkyl having a carbon atom of 1 or more and 18 or less such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, and octadecyl (meth)acrylate. These may be used alone or in combination of two or more.

Preferably, a combination of a higher alkyl (meth)acrylate having a higher alkyl portion having a carbon atom of 6 or more and 18 or less and a lower alkyl (meth)acrylate having a lower alkyl portion having a carbon atom of 1 or more and 4 or less is used.

A polar group-containing vinyl monomer which is a secondary monomer is a copolymerizable monomer which can be copolymerized with a main monomer. Examples of the polar group-containing vinyl monomer include hydroxyl group-containing vinyl monomers such as hydroxymethyl (meth)acrylate, hydroxyethyl (meth)acrylate, hydroxypropyl (meth)acrylate, and hydroxybutyl (meth)acrylate. In addition, examples of the polar group-containing vinyl monomer include carboxyl group-containing vinyl monomers such as (meth)acrylate, amide group-containing vinyl monomers such as (meth)acrylamido, amino group-containing vinyl monomers such as aminoethyl (meth)acrylate, glycidyl group-containing vinyl monomers such as glycidyl (meth)acrylate, cyano group-containing vinyl monomers such as (meth)acrylonitrile, and heterocyclic ring-containing vinyl monomers such as N-vinyl-2-pyrrolidone. Preferably, a hydroxyl group-containing vinyl monomer is used.

A mixing ratio of the main monomer and the secondary monomer in the monomer component is appropriately selected so as to exhibit the above-described function (action). A ratio of the main monomer in the monomer component is 80% by mass or more and 99% by mass or less, and a ratio of the secondary monomer is the above-described remaining portion.

For example, a known additive such as a cross-linking agent and a tackifier may be added to the pressure-sensitive adhesive component.

Examples of the cross-linking agent include an isocyanate-based cross-linking agent, an epoxy-based cross-linking agent, and a metal ion-based cross-linking agent, and preferably, an isocyanate-based cross-linking agent is used. A mixing ratio of the cross-linking agent is, for example, 0.001 parts by mass or more and 10 parts by mass or less with respect to 100 parts by mass of the base polymer of the pressure-sensitive adhesive component.

Examples of the tackifier include a rosin-based resin, a rosin phenol-based resin, a terpene-based resin, and a petroleum-based resin, and preferably, a rosin phenol-based resin is used. A mixing ratio of the tackifier is, for example, 1 part by mass or more and 15 parts by mass or less with respect to 100 parts by mass of the base polymer of the pressure-sensitive adhesive component.

A mixing ratio of the pressure-sensitive adhesive component is, for example, 10% by mass or more, preferably 20% by mass or more, and for example, 99% by mass or less, preferably 90% by mass or less with respect to the pressure-sensitive adhesive composition.

When the mixing ratio of the pressure-sensitive adhesive component is the above-described lower limit or more, it is possible to improve initial pressure-sensitive adhesive properties of the pressure-sensitive adhesive composition.

The gas generating particles are particles configured to generate a gas by a stimulus such as heating, contact, and the like (preferably, heating), which is imparted to the pressure-sensitive adhesive composition. In other words, the gas generating particles are latent gas generating particles configured so as not to generate a gas before the above-described stimulus is imparted to the pressure-sensitive adhesive composition.

Further, the gas generating particles are dispersed with respect to the pressure-sensitive adhesive component in the pressure-sensitive adhesive composition. Specifically, the gas generating particles are not dissolved in the pressure-sensitive adhesive component in the pressure-sensitive adhesive composition and are dispersed in a particle form.

The shape of the gas generating particles is not particularly limited, and examples thereof include a generally spherical shape, a generally plate (flat) shape, a generally needle shape, and an amorphous shape.

An average value of the maximum length (average particle size in the case of a generally spherical shape) as a dimension of the gas generating particles is, for example, 1000 µm or less, preferably, 100 µm or less, more preferably 10 µm or less, particularly preferably 7.5 µm or less, most preferably 5 µm or less, and for example, 0.1 µm or more.

When the dimension of the gas generating particles is the above-described upper limit or less (preferably, 10 µm or less), it is possible to suppress contamination of the adherend 9 (described later, FIG. 1B) by a gas locally generated due to the excessive amount of the gas generating particles when a stimulus is imparted to the pressure-sensitive adhesive composition.

On the other hand, when the dimension of the gas generating particles is the above-described lower limit or more, it is possible to decrease a mixing ratio of a dispersant (described later) for fine dispersing the gas generating particles.

A method for measuring the dimension of the gas generating particles is described in detail in Examples to be described later.

In addition, the gas generating particles are, for example, insoluble with respect to the pressure-sensitive adhesive component in the pressure-sensitive adhesive composition before imparting a stimulus (heating and the like).

Examples of the gas generating particles include particles made of only a gas generating component (first embodiment), and particles including a core made of a gas generating component and a shell covering the core (second embodiment).

An example of the gas generating component (gas generating agent) constituting the particles of the first embodiment includes a heating-type foaming agent (thermally decomposed-type foaming agent) which generates a gas by heating.

Examples of the heating-type foaming agent include an organic foaming agent and an inorganic foaming agent.

The organic foaming agent is other than a polymer-type foaming agent such as a glycidyl azide polymer, and examples thereof include azo-based foaming agents such as azodicarbonamide (ADCA), barium azodicarboxylate, azobisisobutyronitrile (AIBN), azocyclohexylnitrile, and azodiaminobenzene; N-nitroso-based foaming agents such as N,N'-dinitrosopentamethylenetetramine (DTP), N,N'-dimethyl-N,N'-dinitrosoterephthalamide, and trinitrosotrimethyltriamine; hydrazide-based foaming agents such as 4,4'-oxybis(benzenesulfonyl hydrazide) (OBSH), para-toluenesulfonyl hydrazide, diphenylsulfone-3,3'-disulfonyl hydrazide, 2,4-toluenedisulfonyl hydrazide, p,p-bis(benzenesulfonyl hydrazide) ether, benzene-1,3-disulfonyl hydrazide, and allylbis(sulfonyl hydrazide); semicarbazide-based foaming agents such as p-toluilenesulfonyl semicarbazide and 4,4'-oxybis(benzenesulfonyl semicarbazide); alkane fluoride-based foaming agents such as trichloromonofluoromethane and dichloromonofluoromethane; and triazole-based foaming agents such as 5-morpholyl-1,2,3,4-thiatriazole.

Examples of the inorganic foaming agent include hydrogen carbonates such as sodium hydrogen carbonate and ammonium hydrogen carbonate; carbonates such as sodium carbonate and ammonium carbonate; nitrites such as sodium nitrite and ammonium nitrite; and boronhydride salts such as sodium borohydride.

These heating-type foaming agents may be used alone or in combination of two or more.

As the heating-type foaming agent, preferably, an organic foaming agent is used, more preferably, an azo-based foaming agent is used, further more preferably, ADCA is used.

Unlike the hydrazide-based foaming agent such as OBSH, the azo-based foaming agent (preferably, ADCA) can suppress generation of a residue containing an oligomer, and therefore, it is possible to suppress the contamination of the adherend 9 by the residue.

An example of the ADCA includes a commercially available product, and specifically, examples thereof include the Vinyfor series and the FE series (hereinabove, manufactured by EIWA CHEMICAL IND. CO., LTD.).

The particles of the second embodiment include, for example, a shell made of a polymer such as a polyacrylonitrile-based and a core encapsulated (enclosed) in the shell and made of a low boiling point hydrocarbon (gas generating component) such as pentane. In the particles of the second embodiment, the low boiling point hydrocarbon of the core thermally expands by heating, and a portion thereof permeates through the shell as a gas to be released to the outside. An example of the particles of the second embodiment includes a commercially available product, and specifically, examples thereof include the Matsumoto Microsphere F series and the Matsumoto Microsphere FE series (hereinabove, manufactured by Matsumoto Yushi-Seiyaku Co., Ltd.).

As the gas generating particles, preferably, particles of the first embodiment are used because a content ratio of the gas generating component is high.

The gas generating component constituting the gas generating particles in the present embodiment contains many structures which contribute to the generation of a gas at the time of heating in a molecule. Therefore, the gas generation amount of the gas generating particles is larger than that of the glycidyl azide polymer described in Patent Document 1, and specifically, is, for example, 50 mL/g or more, preferably 100 mL/g or more, more preferably 125 mL/g or more, and for example, 1000 mL/g or less at 0°C and 1013 hPa (standard state).

A mixing ratio of the gas generating particles is adjusted so that a mixing ratio of the gas generating component is, for example, 1 part by mass or more, preferably 10 parts by mass or more, and for example, 100 parts by mass or less, preferably 80 parts by mass or less with respect to 100 parts by mass of the base polymer of the pressure-sensitive adhesive component. When the mixing ratio of the gas generating component is the above-described upper limit or less, the mixing ratio of the pressure-sensitive adhesive component can be set to be the above-described lower limit or more (high range), and therefore, it is possible to improve the initial pressure-sensitive adhesive properties of the pressure-sensitive adhesive composition.

When the mixing ratio is the above-described lower limit or more, the pressure-sensitive adhesive composition can ensure a desired gas generation amount (described later). When the mixing ratio is the above-described upper limit or less, it is possible to suppress disintegration (that the shape of the pressure-sensitive adhesive layer cannot be retained) of the pressure-sensitive adhesive composition caused by a gas excessively generated.

In addition, the pressure-sensitive adhesive composition may further contain a dispersant.

The dispersant is blended so as to improve dispersibility of the gas generating particles (dispersibility in a gas generating particle dispersion liquid of the gas generating particles described in the next producing method, and furthermore, dispersibility in the pressure-sensitive adhesive composition) and further to bring the gas generating particles into a desired dimension. The kind of the dispersant is not particularly limited, and an example thereof includes a polymer-type dispersant. A commercially available product can be used as the dispersant, and specifically, examples thereof include the FLOWLEN DOPA Series (manufactured by KYOEISHA CHEMICAL CO., LTD.), the Solsperse series (manufactured by The Lubrizol Corporation), the EFKA Series (manufactured by BASF SE), the Disper BYK series (manufactured by BYK Japan KK), and the DISPARLON series (manufactured by Kusumoto Chemicals, Ltd.).

A mixing ratio of the dispersant is, for example, 10 parts by mass or more, preferably 30 parts by mass or more, and for example, 100 parts by mass or less, preferably 70 parts by mass or less with respect to 100 parts by mass of the gas generating particles.

In order to prepare (produce) the pressure-sensitive adhesive composition, the above-described pressure-sensitive adhesive component and the gas generating particles are blended.

Specifically, the pressure-sensitive adhesive component is prepared. Separately, the gas generating particles are prepared.

In order to prepare the gas generating particles, for example, the gas generating particles are dispersed in an organic solvent (dispersion medium) to prepare a gas generating particle liquid containing the gas generating particles and an organic solvent (specifically, the gas generating particle dispersion liquid).

The organic solvent is not particularly limited as long as it is the dispersion medium capable of dispersing the gas generating particles in a particle form, and examples thereof include ester-based solvents such as ethyl acetate and butyl acetate, ketone-based solvents such as acetone, methyl ethyl ketone, and methyl isobutyl ketone, aromatic hydrocarbon-based solvents such as benzene, toluene, and xylene, alcohol-based solvents such as methanol, ethanol, and isopropanol, alkylene glycol ester-based solvents such as ethylene glycol monomethyl ether acetate and propylene glycol monomethyl ether acetate, halogen-based solvents such as dichloromethane and chloroform, and petroleum-based solvents such as mineral spirit. Preferably, an ester-based solvent is used.

A mixing ratio of the organic solvent is adjusted so that a content ratio of the gas generating particles in the gas generating particle liquid is, for example, 1% by mass or more, preferably 5% by mass or more, and for example, 50% by mass or less, preferably 30% by mass or less.

Further, the gas generating particles can be dispersed in an organic solvent (dispersion medium) in the presence of the above-described dispersant. Specifically, the gas generating particles, the dispersant, and the organic solvent are blended to mix them.

Further, the gas generating particles are, for example, dispersed in the organic solvent (preferably, together with the dispersant) using a dispersing machine such as a mill including a bead mill.

Next, the pressure-sensitive adhesive component and the gas generating particles are blended.

Specifically, the pressure-sensitive adhesive component and the gas generating particle liquid are blended to mix them. Also, in this mixture, the gas generating particles are dispersed in a particle form with respect to the pressure-sensitive adhesive component and the organic solvent. Thus, the pressure-sensitive adhesive composition is prepared as a varnish containing the organic solvent (for example, a coating liquid).

Thereafter, the pressure-sensitive adhesive composition (preferably, a varnish) is applied to a substrate sheet and the like, and then, dried to remove the organic solvent, thereby forming a pressure-sensitive adhesive layer made of a solid content of the pressure-sensitive adhesive composition.

Also, in the pressure-sensitive adhesive layer, the gas generating particles are dispersed in a particle form with respect to the pressure-sensitive adhesive component.

A tensile elastic modulus at 25°C of the pressure-sensitive adhesive layer (solid content of the pressure-sensitive adhesive composition) is 5 MPa or less, preferably 1 MPa or less, more preferably 500 kPa or less, and for example, 0.1 kPa or more.

When the tensile elastic modulus of the pressure-sensitive adhesive layer (solid content of the pressure-sensitive adhesive composition) is above the above-described upper limit, the pressure-sensitive adhesive layer (solid content of the pressure-sensitive adhesive composition) becomes excessively hard, and the initial pressure-sensitive adhesive properties cannot be developed.

When the tensile elastic modulus of the pressure-sensitive adhesive layer (solid content of the pressure-sensitive adhesive composition) is the above-described lower limit or more, shape retaining properties are excellent.

The tensile elastic modulus of the pressure-sensitive adhesive layer (pressure-sensitive adhesive composition) is measured in conformity with JIS K6922-2 (2018).

Further, an initial pressure-sensitive adhesive force of the pressure-sensitive adhesive layer is, for example, 0.5 N/20mm or more, preferably 1 N/20mm or more, more preferably 3 N/20mm or more.

When the initial pressure-sensitive adhesive force of the pressure-sensitive adhesive layer is the above-described lower limit or more, it is possible to obtain an excellent initial pressure-sensitive adhesive force.

When the initial pressure-sensitive adhesive force of the pressure-sensitive adhesive layer is the above-described upper limit or less, it is possible to suppress the releasability after imparting a stimulus due to the excessive initial pressure-sensitive adhesive force.

A method for measuring the pressure-sensitive adhesive force of the pressure-sensitive adhesive layer is described in detail in Examples to be described later.

The pressure-sensitive adhesive force of the pressure-sensitive adhesive layer is a pressure-sensitive adhesive force possessed by the pressure-sensitive adhesive layer before heating.

A gas generation amount at which the gas generating particles are generated in the pressure-sensitive adhesive layer (solid content of the pressure-sensitive adhesive composition) is 5 mL/g or more, preferably 10 mL/g or more, more preferably 15 mL/g or more, further more preferably 20 mL/g or more, and for example, 100 mL/g or less in terms of decane at 0°C and 1013 hPa.

When the gas generation amount is below the above-described lower limit, the gas generation amount becomes excessively small at the time of imparting a stimulus to the pressure-sensitive adhesive layer (pressure-sensitive adhesive composition), and the releasability of the pressure-sensitive adhesive layer decreases.

When the gas generation amount is the above-described upper limit or less, it is possible to suppress the vigorous generation of a gas from the pressure-sensitive adhesive composition to contaminate the adherend 9 at the time of imparting a stimulus to the pressure-sensitive adhesive composition.

As the details are described in Examples later, a method for determining a gas generation amount at which the gas generating particles are generated in the pressure-sensitive adhesive layer (pressure-sensitive adhesive composition) is, for example, obtained as a volume in terms of decane at 0°C and 1013 hPa (1 atmosphere) of a gas generated on heating at 250°C with a mass spectrometer.

Next, one embodiment of the pressure-sensitive adhesive sheet of the present invention including the above-described pressure-sensitive adhesive layer is described with reference to FIG. 1A.

As shown in FIG. 1A, a pressure-sensitive adhesive sheet 1 has one surface and the other surface facing each other in a thickness direction, and has a generally sheet (plate) shape extending in a plane direction (direction perpendicular to the thickness direction).

The pressure-sensitive adhesive sheet 1 includes a pressure-sensitive adhesive layer 2 made of the above-described pressure-sensitive adhesive composition (solid content of the pressure-sensitive adhesive composition).

The pressure-sensitive adhesive layer 2 has one surface and the other surface facing each other in the thickness direction, and has a generally sheet (plate) shape extending in the plane direction.

A thickness of the pressure-sensitive adhesive layer 2 is not particularly limited, and is, for example, 0.1 µm or more, preferably 1 µm or more, more preferably 5 µm or more, and for example, 1000 µm or less, preferably 100 µm or less. The thickness of the pressure-sensitive adhesive layer 2 is a distance between one surface and the other surface in the thickness direction of the pressure-sensitive adhesive layer 2.

Further, the pressure-sensitive adhesive sheet 1 may further include a substrate sheet 3 shown by a phantom line and a second substrate sheet 4 shown by the phantom line.

In the pressure-sensitive adhesive sheet 1, the substrate sheet 3, the pressure-sensitive adhesive layer 2, and the second substrate sheet 4 are disposed in order toward one side in the thickness direction.

The substrate sheet 3 is a release sheet (separator) which protects the other surface of the pressure-sensitive adhesive layer 2 until the pressure-sensitive adhesive layer 2 pressure-sensitively adheres to a substrate 8 (FIG. 1B) to be described later, and is peeled from the other surface of the pressure-sensitive adhesive layer 2 when the pressure-sensitive adhesive layer 2 pressure-sensitively adheres to the substrate 8. The substrate sheet 3 is in contact with the entire other surface of the pressure-sensitive adhesive layer 2. Examples of the substrate sheet 3 include plastic-based substrate sheets (synthetic resin sheets) such as a polyester sheet (polyethylene terephthalate (PET) sheet and the like), a polyolefin sheet (polyethylene sheet, polypropylene sheet, and the like), a polyvinyl chloride sheet, a polyimide sheet, a polyamide sheet (nylon sheet), and a rayon sheet and papers. Preferably, a plastic-based substrate sheet is used. A thickness of the substrate sheet 3 is, for example, 1 µm or more and 1000 µm or less.

The second substrate sheet 4 is a release sheet (separator) which protects one surface of the pressure-sensitive adhesive layer 2 until the pressure-sensitive adhesive layer 2 pressure-sensitively adheres to the adherend 9 and is peeled from one surface of the pressure-sensitive adhesive layer 2 when the pressure-sensitive adhesive layer 2 pressure-sensitively adheres to the adherend 9. The second substrate sheet 4 is in contact with the entire one surface of the pressure-sensitive adhesive layer 2. The second substrate sheet 4 has the same configuration as the substrate sheet 3.

In order to fabricate (produce) the pressure-sensitive adhesive sheet 1, for example, a pressure-sensitive adhesive composition (or a varnish) is applied to one surface of the substrate sheet 3, and then, when the pressure-sensitive adhesive composition is a varnish, it is dried to remove an organic solvent to form the pressure-sensitive adhesive layer 2 on one surface of the substrate sheet 3. Thereafter, the second substrate sheet 4 is brought into contact with (attached to) one surface of the pressure-sensitive adhesive layer 2.

Thus, the pressure-sensitive adhesive sheet 1 including the substrate sheet 3, the pressure-sensitive adhesive layer 2, and the second substrate sheet 4 in order at one side in the thickness direction is fabricated (produced).

Next, a method in which the adherend 9 is subjected to initial pressure-sensitive adhesion to the substrate 8 using the pressure-sensitive adhesive sheet 1, and then, the adherend 9 is peeled with respect to the substrate 8 is described with reference to FIG. IB.

First, in this method, when the pressure-sensitive adhesive sheet 1 includes the substrate sheet 3 (ref: FIG. 1A), the substrate sheet 3 is removed from the pressure-sensitive adhesive sheet 1. Specifically, the substrate sheet 3 is peeled from the other surface of the pressure-sensitive adhesive layer 2.

Subsequently, as shown in FIG. 1B, the other surface of the pressure-sensitive adhesive layer 2 is attached to the substrate 8. Specifically, the other surface of the pressure-sensitive adhesive layer 2 is subjected to pressure-sensitively adhesion (initial pressure-sensitive adhesion) (temporary fixing) with respect to the surface of the substrate 8.

The substrate 8 is a member having a surface which is a placement surface on which the pressure-sensitive adhesive layer 2 is placed, and is not particularly limited. An example thereof includes a carrier sheet.

Subsequently, when the pressure-sensitive adhesive sheet 1 includes the second substrate sheet 4 (ref: FIG. 1A), the second substrate sheet 4 is removed from the pressure-sensitive adhesive sheet 1. Specifically, the second substrate sheet 4 is peeled from one surface of the pressure-sensitive adhesive layer 2. Thereafter, the adherend 9 is attahced to one surface of the pressure-sensitive adhesive layer 2. Specifically, the surface of the adherend 9 is subjected to pressure-sensitively adhesion (initial pressure-sensitive adhesion) with respect to one surface of the pressure-sensitive adhesive layer 2.

An example of the adherend 9 includes a member which is subjected to initial pressure-sensitive adhesion (pressure-sensitively adhesion) for a period of time necessary for the substrate 8 (for example, a period of an inspection process and the like), and after the lapse of the period, is peeled from the substrate 8 by imparting a predetermined stimulus to the pressure-sensitive adhesive layer 2. The adherend 9 is not particularly limited, and examples thereof include electronic components such as a semiconductor component.

Thus, the adherend 9 is subjected to initial pressure-sensitive adhesion (pressure-sensitively adhesion) with respect to the substrate 8 via the pressure-sensitive adhesive layer 2.

Thereafter, a stimulus is imparted to the pressure-sensitive adhesive layer 2.

Examples of the stimulus imparted to the pressure-sensitive adhesive layer 2 include heating, energy rays (ultraviolet rays and the like), vibration, and pressure. Preferably, heating and energy rays are used, more preferably, heating is used.

In order to heat the pressure-sensitive adhesive layer 2, the pressure-sensitive adhesive layer 2 is heated via the substrate 8 by heating the substrate 8. Further, for example, a pressure-sensitive adhesive structure 20 including the substrate 8, the pressure-sensitive adhesive layer 2, and the adherend 9 can be put into a heating furnace to heat the pressure-sensitive adhesive layer 2.

A heating temperature is not particularly limited. For example, when the gas generating particles are the particles of the first embodiment (gas generating component), heating is carried out at a temperature at which the gas generating particles are thermally decomposed or more. For example, when the gas generating particles are the particles of the second embodiment, heating is carried out at a temperature at which the core is thermally expanded or more.

Or, an energy ray such as an ultraviolet ray is irradiated onto the pressure-sensitive adhesive layer 2. By irradiating the energy ray to the pressure-sensitive adhesive layer 2, the pressure-sensitive adhesive layer 2 (further, gas generating particles) may be heated.

By imparting a stimulus to the pressure-sensitive adhesive layer 2, the gas generating particles contained in the pressure-sensitive adhesive layer 2 generate a gas. Thus, the pressure-sensitive adhesive force of the pressure-sensitive adhesive layer 2 decreases. Therefore, the releasability (easy releasability) is developed.

Thus, as shown by an arrow of FIG. 1B, the adherend 9 is easily peeled from one surface of the pressure-sensitive adhesive layer 2. In other words, the peeling occurs at the interface between the adherend 9 and the pressure-sensitive adhesive layer 2.

The substrate 8 is not peeled from the other surface of the pressure-sensitive adhesive layer 2 and retains a state of tight contact therewith. In other words, a tight contact state is retained at the interface between the substrate 8 and the pressure-sensitive adhesive layer 2.

Then, in the pressure-sensitive adhesive composition described above, since the gas generation amount at which the gas generating particles are generated in the pressure-sensitive adhesive composition is as high as 5 mL/g or more with respect to the solid content of the pressure-sensitive adhesive composition, it has excellent releasability.

In addition, in the pressure-sensitive adhesive composition, it is only necessary that the gas generating particles are simply dispersed in the pressure-sensitive adhesive component, that is, as in Patent Document 1, it is not necessary to include a large number of groups that do not contribute to the generation of a gas for being dissolved in the pressure-sensitive adhesive component. Therefore, it is possible to suppress a decrease in the gas generation amount, while a mixing ratio of the gas generating particles is retained low to some extent, and accordingly, it is possible to increase a mixing ratio of the pressure-sensitive adhesive component. Therefore, the pressure-sensitive adhesive composition has excellent initial pressure-sensitive adhesive properties.

As a result, the pressure-sensitive adhesive composition of the present invention has both excellent releasability and excellent initial pressure-sensitive adhesive properties.

Further, since the pressure-sensitive adhesive sheet 1 includes the pressure-sensitive adhesive layer 2 made of the pressure-sensitive adhesive composition described above, it has both excellent releasability and excellent initial pressure-sensitive adhesive properties.

### Modified Examples

In the following each of the modified examples, the same reference numerals are provided for members and steps corresponding to each of those in the above-described one embodiment, and their detailed description is omitted. Further, each of the modified examples can achieve the same function and effect as that of one embodiment unless otherwise specified. Furthermore, one embodiment and the modified examples thereof can be appropriately used in combination.

In one embodiment, as shown in FIG. 1B, each of the substrate 8 and the adherend 9 is disposed on each of one surface and the other surface in the thickness direction of the pressure-sensitive adhesive layer 2 to peel the adherend 9 from one surface of the pressure-sensitive adhesive layer 2. However, for example, though not shown, each of the adherend 9 and the substrate 8 may be also disposed on each of one surface and the other surface in the thickness direction of the pressure-sensitive adhesive layer 2 to peel the adherend 9 from the other surface of the pressure-sensitive adhesive layer 2.

Further, the pressure-sensitive adhesive layer 2 is formed on one surface of the substrate sheet 3 and then, disposed on (transferred onto) the substrate 8. Alternatively, for example, though not shown, a pressure-sensitive adhesive composition may be directly disposed (applied) on one surface of the substrate 8.

As shown in FIG. 2A, the pressure-sensitive adhesive sheet 1 may further include a second pressure-sensitive adhesive layer 7 made of a second pressure-sensitive adhesive composition that does not contain a gas generating agent.

The second pressure-sensitive adhesive layer 7 is disposed on the other surface in the thickness direction of the pressure-sensitive adhesive layer 2. Specifically, the second pressure-sensitive adhesive layer 7 is in contact with the entire other surface in the thickness direction of the pressure-sensitive adhesive layer 2. In other words, in the pressure-sensitive adhesive sheet 1, the second pressure-sensitive adhesive layer 7 and the pressure-sensitive adhesive layer 2 are disposed in order toward one side in the thickness direction. The shape and the thickness of the second pressure-sensitive adhesive layer 7 are the same as those of the pressure-sensitive adhesive layer 2.

The second pressure-sensitive adhesive layer 7 and the pressure-sensitive adhesive layer 2 configure a pressure-sensitive adhesive laminate 10.

In addition, when the pressure-sensitive adhesive sheet 1 includes the substrate sheet 3, the second pressure-sensitive adhesive layer 7 is interposed between the substrate sheet 3 and the pressure-sensitive adhesive layer 2.

Further, when the pressure-sensitive adhesive sheet 1 includes the substrate sheet 3 and the second substrate sheet 4, the substrate sheet 3, the second pressure-sensitive adhesive layer 7, the pressure-sensitive adhesive layer 2, and the second substrate sheet 4 are disposed in order toward one side in the thickness direction.

The second pressure-sensitive adhesive composition is a material for the second pressure-sensitive adhesive layer 7, and does not contain a gas generating agent configured to generate a gas by a stimulus. The gas generating agent is a concept including, as described above, the gas generating particles dispersed in the pressure-sensitive adhesive component and a dissolved-type gas generating agent (for example, an azide compound such as glycidyl azide polymer and/or a terminal modified-type azo compound having a molecular terminal modified with an alkyl group) dissolved in the pressure-sensitive adhesive component.

On the other hand, the second pressure-sensitive adhesive composition contains the above-described pressure-sensitive adhesive polymer and the above-described additive at an appropriate ratio. In other words, the second pressure-sensitive adhesive composition has the same configuration as the first pressure-sensitive adhesive composition, except that it does not contain a gas generating agent.

A tensile elastic modulus and an initial pressure-sensitive adhesive force at 25°C of the second pressure-sensitive adhesive layer 7 are, for example, the same as those in the pressure-sensitive adhesive layer 2. On the other hand, a gas generation amount of the second pressure-sensitive adhesive layer 7 is substantially 0 mL/g in terms of decane at 0°C and 1013 hPa.

Since the gas generating particles exist in the pressure-sensitive adhesive layer 2, while there is no gas generating agent in the second pressure-sensitive adhesive layer 7, the gas generating particles are unevenly distributed at one side in the thickness direction in the pressure-sensitive adhesive laminate 10.

In order to fabricate (produce) the pressure-sensitive adhesive sheet 1 described in FIG. 2A, for example, the pressure-sensitive adhesive layer 2 and the second pressure-sensitive adhesive layer 7 are attached to each other. For example, the pressure-sensitive adhesive layer 2 is formed on the other surface of the second substrate sheet 4, and separately, the second pressure-sensitive adhesive layer 7 is formed on one surface of the substrate sheet 3. Thereafter, the other surface of the pressure-sensitive adhesive layer 2 and one surface of the second pressure-sensitive adhesive layer 7 are brought into contact with each other.

The other surface of the second pressure-sensitive adhesive layer 7 in the pressure-sensitive adhesive sheet 1 is attached to the substrate 8, and one surface of the pressure-sensitive adhesive layer 2 is attached to the adherend 9.

Thereafter, a stimulus is imparted to the pressure-sensitive adhesive laminate 10. Then, an adhesive force of the pressure-sensitive adhesive layer 2 with respect to the adherend 9 decreases based on the generation of a gas of the gas generating particles in the pressure-sensitive adhesive layer 2. On the other hand, the adhesive force of the second pressure-sensitive adhesive layer 7 with respect to the substrate 8 is not lowered and retained because there is no generation of a gas described above. In other words, the adhesive force of the adherend 9 with respect to the pressure-sensitive adhesive layer 2 is lower than the adhesive force of the second pressure-sensitive adhesive layer 7 with respect to the substrate 8.

Therefore, in a state where the pressure-sensitive adhesive laminate 10 pressure-sensitively adheres to the substrate 8, the adherend 9 is easily and reliably peeled from the pressure-sensitive adhesive laminate 10. In other words, one surface and the other surface in the thickness direction of the pressure-sensitive adhesive laminate 10 can be selectively set such that one surface of the pressure-sensitive adhesive laminate 10 formed by the pressure-sensitive adhesive layer 2 is a peeling surface, and the other surface of the pressure-sensitive adhesive laminate 10 formed by the second pressure-sensitive adhesive layer 7 is an adhesive surface.

### Examples

Next, the present invention is further described based on Examples and Comparative Examples shown below. The present invention is however not limited by Examples and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### Preparation Example 1

### <Preparation of Acrylic Copolymer (Pressure-Sensitive Adhesive Base Polymer)>

A monomer component containing 70 parts by mass of ethyl acrylate, 30 parts by mass of 2-ethylhexyl acrylate, 4 parts by mass of hydroxyethyl acrylate, and 5 parts by mass of methyl methacrylate was copolymerized by a solution polymerization method to prepare an acrylic copolymer. The acrylic copolymer was dispersed in ethyl acetate which was a reaction solvent.

### Preparation Example 2

### <Preparation of Acrylic Polymer (Pressure-Sensitive Adhesive Base Polymer)>

As an acrylic polymer, SK1811L manufactured by Soken Chemical & Engineering Co., Ltd. was prepared.

### Example 1

### <Preparation of Gas Generating Particle Dispersion Liquid>

Gas generating particles (manufactured by EIWA CHEMICAL IND. CO., LTD., FE-788, ADCA particles, gas generation amount of 135 mL/g) (20 g), 10 g of a dispersant (manufactured by KYOEISHA CHEMICAL CO., LTD., FLOWLEN DOPA-100), and 170 g of ethyl acetate were blended to be stirred for 1 hour with a bead mill, thereby preparing a gas generating particle dispersion liquid.

### <Fabrication of Pressure-Sensitive Adhesive Sheet>

The acrylic copolymer of Preparation Example 1 (100 parts by mass), 1.4 parts by mass of an isocyanate-based cross-linking agent (manufactured by Nippon Polyurethane Industry Co., Ltd., Coronate L), 200 parts by mass of a gas generating particle dispersion liquid (containing 20 parts by mass of gas generating particles), 10 parts by mass of a rosin phenol-based resin (manufactured by Sumitomo Bakelite Co., Ltd., SUMILITE RESIN PR-12603, tackifier), and an ethyl acetate (containing a reaction solvent of an acrylic copolymer) were uniformly mixed to prepare a coating liquid (varnish). Then, the coating liquid was applied and dried on one surface in the thickness direction of the substrate sheet (separator made of PET, thickness of 38 µm) 3 so that the thickness thereof after drying was 20 µm to prepare the pressure-sensitive adhesive layer 2. Thereafter, the second substrate sheet (separator made of PET, 38 µm) 4 was attached to one surface in the thickness direction of the pressure-sensitive adhesive layer 2. Thus, as shown in FIG. 1A, a pressure-sensitive adhesive sheet including the substrate sheet 3, the pressure-sensitive adhesive layer 2, and the second substate sheet 4 in order toward one side in the thickness direction was fabricated.

### Examples 2 to 6 and Comparative Examples 1 to 3

A pressure-sensitive adhesive sheet was fabricated in the same manner as in Example 1, except that the formulation of the base polymer or the gas generating particle dispersion liquid was changed in accordance with Table 1.

### Example 7

The pressure-sensitive adhesive layer 2 having a thickness of 1 µm was formed on the other surface of the second substrate sheet 4 in the same manner as in Example 1.

Separately, the second pressure-sensitive adhesive layer 7 having a thickness of 5 µm was formed on one surface of the substrate sheet 3 from the second pressure-sensitive adhesive composition containing no gas generating particles in the same manner as in Example 1, except that the gas generating particle dispersion liquid was not blended.

Thereafter, the pressure-sensitive adhesive layer 2 and the second pressure-sensitive adhesive layer 7 were attached to each other. Thus, as shown in FIG. 2A, the pressure-sensitive adhesive sheet 1 including the pressure-sensitive adhesive laminate 10 consisting of the pressure-sensitive adhesive layer 2 and the second pressure-sensitive adhesive layer 7 was fabricated.

The details of each of the gas generating particles, the gas generating agent, and the like in Examples and Comparative Examples are shown below.
- FE-788: gas generating particles, ADCA particles, gas generation amount of 135 mL/g (0°C, 1013 hPa), manufactured by EIWA CHEMICAL IND. CO., LTD.
- Vinyfor AC#3C-K2: gas generating particles, ADCA particles, gas generation amount of 210 mL/g (0°C, 1013 hPa), manufactured by EIWA CHEMICAL IND. CO., LTD.
- Neocellborn N#1000M: gas generating particles, OBSH particles, gas generation amount of 125 mL/g (0°C, 1013 hPa), manufactured by EIWA CHEMICAL IND. CO., LTD.
- Glycidyl azide polymer: dissolved-type gas generating agent represented by the following formula (1), abbreviated as "GAP", weight average molecular weight of about 2000, gas generation amount of 20 mL/g (0°C, 1013 hPa), wherein "x" and "n" represent the number of repetitions.

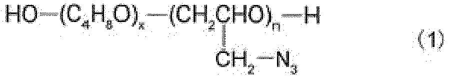

### <Evaluation>

The following items were evaluated for each of the pressure-sensitive adhesive sheets (each of the pressure-sensitive adhesive layers and each of the second pressure-sensitive adhesive layers) of Examples and Comparative Examples. The results are described in Tables 1 to 3.

### [Average Particle Size]

The pressure-sensitive adhesive sheet 1 was cut into a 5-cm square, and the pressure-sensitive adhesive layer 2 thereof was observed with an optical microscope of 500 magnifications. Then, the size of 20 randomly selected particles was measured, and an average value of the size was obtained as an average particle size.

### [Tensile Elastic Modulus]

A tensile elastic modulus at 25°C of the pressure-sensitive adhesive layer (solid material of the pressure-sensitive adhesive composition) 2 before heating was measured in accordance with JIS K 6922-2.

### [Pressure-Sensitive Adhesive Force]

The substrate sheet 3 was peeled from the other surface of the pressure-sensitive adhesive layer 2, then, the substrate 8 made of a PET sheet having a thickness of 25 µm was attached to the other surface of the pressure-sensitive adhesive layer 2, and thereafter, the obtained sheet was cut into a size of a width of 20 mm and a length of 100 mm to fabricate a sample.

Thereafter, the second substrate sheet 4 was peeled from the sample, and one surface of the pressure-sensitive adhesive layer 2 was compressively bonded to the surface of the adherend 9 made of SUS304 by one reciprocation of a 2-Kg roller under an atmosphere of 23°C to be cured at room temperature for 30 minutes. Thereafter, by using a peeling tester, a pressure-sensitive adhesive force (pressure-sensitive adhesive strength) at the time of peeling the sample at 23°C with a peeling angle of 180° at a peeling rate of 300 mm/min was measured.

### [Gas Generation Amount]

The substrate sheet 3 and the second substrate sheet 4 were peeled from the pressure-sensitive adhesive layer 2, and the pressure-sensitive adhesive layer 2 was placed in a sample cup to be then heated with a heating furnace-type pyrolyzer (DSP). As the heating conditions, the temperature rising rate was 2°C/min, and the final temperature was 250°C.

The gas generated with the DSP was introduced into a mass spectrometer, and a gas generation amount was measured with the mass spectrometer. Separately, a calibration curve was fabricated with decane of known volume at 0°C and 1013 hPa. This calibration curve was fitted with the above-described measurement results to obtain the volume of the gas generated with the DSP in terms of decane at 0°C and 1013 hPa.

### [Releasability (Reworkability)]

The substrate sheet 3 was peeled from the other surface of the pressure-sensitive adhesive layer 2, and the adherend 9 made of a PET sheet having a thickness of 100 µm was attached thereto, and then, the obtained sheet was cut into a 50-mm square to fabricate a sample for evaluation of reworkability.

Thereafter, the second substate sheet 4 was peeled from the sample, and one surface of the pressure-sensitive adhesive layer 2 was compressively bonded to the surface of the substrate 8 made of a glass plate of 8 cm× 10 cm by one reciprocation of a 2-Kg roller to be cured at room temperature for 30 minutes. Thereafter, the adherend 9 was placed so as to be brought into contact with the surface of a hot plate which was previously heated at 200°C, thereby heating the adherend 9. The appearance at the time was observed from the side of the substrate 8 (one side in the thickness direction), and the releasability was evaluated by the following criteria.
Good: the pressure-sensitive adhesive layer 2 was peeled from the entire surface of the adherend 9.
Bad: the pressure-sensitive adhesive layer 2 was not peeled from the entire surface of the adherend 9, and floating was observed in a portion of the surface of the adherend 9.

### [Contamination]

After the evaluation of the releasability described above, the adherend 9 was observed with an optical microscope, and the contamination was evaluated by the following criteria.
Good: It was not observed that a pressure-sensitive adhesive component remained as deposits (glue remains) on the surface of the adherend 9.
Bad: It was observed that a pressure-sensitive adhesive component remained as deposits (glue remains) on the surface of the adherend 9.

### [Table 1]

**Table 1**

| | Formulation [parts by mass] | | | | | | | | |
|---|---|---|---|---|---|---|---|---|---|
| | Pressure-Sensitive Adhesive Component | | | | Foaming Agent Dispersion Liquid | | | | |
| | Acrylic Copolymer (Pressure-Sensitive Adhesive Polymer) | | Isocyanate-Based Cross-Linking Agent | Rosin Phenol-Based Resin (Tackifier) | Foaming Agent | | | | Dispersant (FLOWLEN DOPA-100) |
| | Preparation Ex. 1 | Preparation Ex. 2 | | | FE-788^{*1} (ADCA) | Vinyfor AC #3C-K2^{*2} (ADCA) | Neocellborn N #1000M (OBSH) | Glycidyl Azide Polymer | |
| Ex. 1 | 100 | - | 1.4 | 10 | 20 | - | - | - | 10 |
| Ex. 2 | 100 | - | 1.4 | 10 | 20 | - | - | - | - |
| Ex. 3 | 100 | - | 1.4 | 10 | 5 | - | - | - | 10 |
| Ex. 4 | 100 | - | 1.4 | 10 | - | 20 | - | - | 2.5 |
| Ex. 5 | 100 | - | 1.4 | 10 | - | - | 20 | - | 2.5 |
| Ex. 6 | - | 100 | 5 | 20 | 20 | - | - | - | 10 |
| Comparative Ex. 1 | 100 | - | 1.4 | 10 | - | - | - | 100 | - |
| Comparative Ex. 2 | 100 | - | 1.4 | 10 | - | - | - | 20 | - |
| Comparative Ex. 3 | 100 | - | 1.4 | 10 | - | 1 | - | - | 0.5 |

| | | | | | | | | | |
|---|---|---|---|---|---|---|---|---|---|
| *1: FE-788 (ADCA): median size of 6 µm *2: Vinyfor AC#3C-K2 (ADCA): median size of 5 µm | | | | | | | | | |

### [Table 2]

**Table 2**

| | Foaming Agent | | | | At Time of Compressive Bonding at 25°C | | After (at) Heating | | |
|---|---|---|---|---|---|---|---|---|---|
| | Kind | State | Particle Size of Gas Generating Particle [µm] | Mixing Ratio (vs 100 parts by mass of Acrylic Copolymer) | Tensile Elastic Modulus (25°C) [MPa] | Pressure-Sensitive Adhesive Force [N/20 mm] | Gas Generation Amount [mL/g] | Reworkability (Releasability) | Contamination |
| Ex. 1 | FE-788(ADCA)^{*1} | Dispersed as Gas Generating Particles | 5 | 20 | 0.3 | 5.9 | 19 | Good | Good |
| Ex. 2 | FE-788(ADCA)^{*1} | Dispersed as Gas Generating Particles | 50 | 20 | 0.3 | 4.2 | 21 | Good | Bad |
| Ex. 3 | FE-788(ADCA)^{*1} | Dispersed as Gas Generating Particles | 5 | 5 | 0.3 | 6.2 | 6 | Good | Good |
| Ex. 4 | Vinyfor AC#3C-K2^{*2} (ADCA) | Dispersed as Gas Generating Particles | 5 | 20 | 0.3 | 5.8 | 30 | Good | Good |
| Ex. 5 | Neocellborn N#1000M (OBSH) | Dispersed as Gas Generating Particles | 5 | 20 | 0.3 | 5.8 | 19 | Good | Bad |
| Ex. 6 | FE-788(ADCA)^{*1} | Dispersed as Gas Generating Particles | 5 | 20 | 2 | 2.4 | 17 | Good | Good |
| Comparative Ex. 1 | Glycidyl Azide Polymer | Gas Generating Agent is Dissolved | - | 100 | 0.3 | 0.1 | 9 | Good | Bad |
| Comparative Ex. 2 | Glycidyl Azide Polymer | Gas Generating Agent is Dissolved | - | 20 | 0.3 | 1 | 3 | Bad | Bad |
| Comparative Ex. 3 | Vinyfor AC#3C-K2^{*2} (ADCA) | Dispersed as Gas Generating Particles | 5 | 1 | 0.3 | 6 | 2 | Bad | Good |

| | | | | | | | | | |
|---|---|---|---|---|---|---|---|---|---|
| *1: FE-788 (ADCA): median size of 6 µm *2: Vinyfor AC#3C-K2 (ADCA): median size of 5 µm | | | | | | | | | |

### [Table 3]

**[Table 3]**

| | Pressure-Sensitive Adhesive Layer | | | | Second Pressure-Sensitive Adhesive Layer | | Before Heating | After (at) Heating | | |
|---|---|---|---|---|---|---|---|---|---|---|
| | Thickness [µm] | Kind of Foaming Agent | Particle Size of Gas Generating Particle [µm] | Content of Foaming Agent [wt%] | Thickness [µm] | Foaming Agent | Tensile Elastic Modulus of Pressure-Sensitive Adhesive Layer (25°C) [MPa] | Gas Generation Amount at which Gas Generating Particles are Generated in Pressure-Sensitive Adhesive Layer [mL/g] | Reworkability (Releasability ) | Contamination |
| Ex. 7 | 1 | FE-788 (ADCA) | 5 | 20 | 5 | - | 0.3 | 18 | Good | Good |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The pressure-sensitive adhesive composition is used for a pressure-sensitive adhesive sheet.

### DESCRIPTION OF REFERENCE NUMBER

- 1: Pressure-sensitive adhesive sheet
- 2: Pressure-sensitive adhesive layer
- 7: Second pressure-sensitive adhesive layer

## Claims

1. A pressure-sensitive adhesive composition comprising:
a pressure-sensitive adhesive component and
a gas generating particle dispersed in the pressure-sensitive adhesive component, wherein
a tensile elastic modulus at 25°C of the pressure-sensitive adhesive composition is 5 MPa or less, and
a gas generation amount at which the gas generating particle is generated in the pressure-sensitive adhesive composition is 5 mL/g or more in terms of decane at 0°C and 1013 hPa in a solid content of the pressure-sensitive adhesive composition.

2. The pressure-sensitive adhesive composition according to claim 1, wherein
the gas generating particle has an average particle size of 10 µm or less.

3. The pressure-sensitive adhesive composition according to claim 1, wherein
the gas generating particle is an azodicarbonamide.

4. A pressure-sensitive adhesive sheet comprising:
a pressure-sensitive adhesive layer made of the pressure-sensitive adhesive composition according to claim 1.

5. The pressure-sensitive adhesive sheet according to claim 4 further comprising:
a second pressure-sensitive adhesive layer made of a second pressure-sensitive adhesive composition containing no gas generating agent, wherein
the pressure-sensitive adhesive layer and the second pressure-sensitive adhesive layer are disposed in order in a thickness direction.
